(19) **Europäisches Patentamt**
**European Patent Office**
**Office européen des brevets**

(11) **EP 2 736 351 B1**

(12) **EUROPEAN PATENT SPECIFICATION**

(45) Date of publication and mention
of the grant of the patent:
**06.01.2016 Bulletin 2016/01**

(51) Int Cl.:
*A23J 1/14* (2006.01)        *A23J 3/14* (2006.01)
*A23J 3/16* (2006.01)

(21) Application number: **12733111.4**

(22) Date of filing: **05.07.2012**

(86) International application number:
**PCT/EP2012/063134**

(87) International publication number:
**WO 2013/013949 (31.01.2013 Gazette 2013/05)**

(54) **PROTEIN ISOLATION FROM OIL SEEDS**

ISOLIERUNG VON PROTEINEN AUS ÖLSAMEN

PROCÉDÉ POUR ISOLER DES PROTÉINES À PARTIR DE GRAINES OLÉAGINEUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.07.2011 EP 11175743**

(43) Date of publication of application:
**04.06.2014 Bulletin 2014/23**

(73) Proprietor: **DSM IP Assets B.V.**
**6411 TE  Heerlen (NL)**

(72) Inventors:
• **WNUKOWSKI, Piotr**
  **NL-6100 AC Echt (NL)**

• **SMOLDERS, Gerardus Johannes Franciscus**
  **NL-6100 AC Echt (NL)**
• **VEERMAN, Cecile**
  **NL-6100 AC Echt (NL)**

(74) Representative: **Schmitt, Maja et al**
**DSM Intellectual Property**
**P.O. Box 4**
**6100 AA Echt (NL)**

(56) References cited:
WO-A1-02/060273        WO-A1-03/030652
WO-A2-01/45521        JP-A- 58 224 645
US-A1- 2003 060 607

**Description**

**Field of the invention**

The present invention relates to a process to isolate protein from oilseeds such as rape seed, sunflower seed, coconut or soybeans.

**Background of the invention**

Oil present in oil seeds is commonly extracted with hexane. However, the combination of extraction and desolventizing process can give rise to denaturation of the proteins. This leads to a conformational state in which proteins do not show technological functionality necessary for the use of proteins in a wide range of food applications. Furthermore, this solvent has become the focus of concerns with respect to safety and environmental effects (hexane has been listed as hazardous air pollutants).

To extract the protein fraction from oil seeds, several extraction techniques have been employed. Mentioned can be extraction with water or alkali, NaCl and sodium hexametaphosphate solutions. An alkaline extraction process leads to highest yields, but have the risk of darkening of the product and a negative impact on taste or smell.

As example rapeseed will be discussed in more detail. Rapeseed is one of the most important oil seeds in the world (number 3 after soybean and palm oil). Rapeseed contains high amounts of oil (30-45%) and protein (20-30%). However, also anti-nutritional compounds such as glucosinolates, polyphenols and phytic acid are present in rapeseed. Table 1 shows a typical range of these constituents in rapeseeds:

Table 1: Anti nutritional compounds in rapeseed

| | |
|---|---|
| Glucosinolates | 10-20 $\mu$mol/kg |
| Sinapin | 1-1.5% (phenolics total (1-3%) |
| Phytic acid | 1-2% |

For protein extraction from rapeseeds the following issues have to be addressed:

- Presence of phenolic compounds which can give rise to a dark colour after processing and an increase in flavour and odour intensity. Canola (rapeseeds) contains about 10 to 30 times the quantity of phenolic compounds as found in soybeans (like sinapin and tannins). Upon oxidation those compounds give rise to a dark colour. Especially strong alkaline conditions lead to rapid oxidation of phenolics to so called quinones which then can react with proteins (giving a dark colour). These phenolic compounds can partly bind to proteins (see US patent 6905713).
- Presence of phytate which can act as chelating agent in the human body and reducing the bioavailability of some metals.
- Presence of glucosinolates. The hydrolysis of glucosinolates might result in toxic products. Glucosinolates decrease also the palatability of rapeseed meal.

**Summary of the invention**

The present invention provides an improved process for the extraction and isolation of protein from oil seed meal whereby this isolation takes place by adding a sufficient amount of water-soluble solvent such as ethanol to an aqueous solution which contains protein extracted from the meal whereby the protein present precipitates. To preserve the nativity of the proteins the meal used for the protein extraction originates preferably from non-hexane treated oilseed.

Optionally this precipitate can be further purified by washing with the water-soluble solvent such as ethanol. The protein isolate can be dried using a suitable drying method.

According to an aspect of the invention a process is provided to isolate native protein from oilseed meal or oilseed oil cake comprising the following steps:

- extracting the meal with water to obtain an aqueous solution;
- concentrating the aqueous extract to an aqueous solution comprising 5 to 30 wt% protein, preferably 10 to 30 wt% protein;
- adding a water-soluble solvent to the concentrated aqueous solution to obtain a protein precipitate, whereby the water soluble solvent is ethanol and which ethanol is added to a final content between 60 and 80 vol%: and
- separating the protein precipitate from the liquid fraction.

Preferably the process of the invention comprises an additional step of washing the protein precipitate. The process of the invention optionally provides the additional step of drying the protein precipitate. Advantageously in the process of the invention after the extraction step and before the addition of the water-soluble solvent, the aqueous solution or concentrated aqueous solution is diafiltrated preferably by using UF (ultra filtration). Preferably soluble carbohydrates, glucosinolates or their derivatives, phytates or polyphenolic (or phenolic) compounds or a combination of one or more of these compounds are removed from the aqueous solution or concentrated aqueous solution. According to one embodiment of the invention the diafiltration takes place before, during or after concentrating the aqueous extract. The meal used in the process of the invention can for example be rapeseed, sunflower or soy meal. Advantageously the isolated protein of the invention has a higher degree of native protein than protein derived from hexane treated meal or state of the art extraction methods which leads to a better technological functionality for the isolated protein of the invention. This functionality has advantages in the use of proteins in a wide range of food applications. The present invention also provides an isolated native oilseed protein or a native oilseed protein composition which comprises

- a protein content of at least 80 wt%, preferably at least 85 wt%, more preferably at least 90 wt%, and most preferably between 92 and 99 wt% (on dry matter);
- an ethanol content of less than 0.2 wt%, preferably less than 0.1 wt% (on dry matter);
- an ethanol content of more than 0.001 wt%, preferably more than 0.01 wt% (on dry matter); and
- a phenolic content of less than 0.1 wt%, preferably less than 0.05 wt%, more preferably less than 0.02 wt% (on dry matter) expressed as sinapic acid equivalents.

In case the protein isolate or protein composition comprises rape seed protein, the composition comprises a phenolic content of less than 0.1 wt%, preferably less than 0.05 wt%, more preferably less than 0.02 wt% (on dry matter) expressed as sinapic acid equivalents. In case the protein isolate or protein composition comprises soy protein, the composition comprises a phenolic content of less than 0.1 wt%, preferably less than 0.05 wt%, more preferably less than 0.02 wt% (on dry matter) expressed as sinapic acid equivalents. In case the protein isolate or protein composition comprises sun flower protein, the composition comprises a phenolic content of less than 0.1 wt%, preferably less than 0.05 wt%, more preferably less than 0.02 wt% (on dry matter) expressed as sinapic acid equivalents.

Preferably the protein isolate or protein composition of the invention has a glucosinolate content of less than 10 $\mu$mol/g, preferably less than 1 $\mu$mol/g (on dry matter).

In general the protein isolate or protein composition of the invention will have a lipid content of 2 to 15 wt%, preferably 2 to 10 wt%, more preferably 2 to 8 wt% (on dry matter) in case of rape seed or sun flower protein or of 2 to 20 wt%, more preferably 2 to 15 wt% (on dry matter) in case of soy protein.

The protein isolate or protein composition of the invention will preferably have a phytate content (P x 3.5) of less than 0.5 wt%, preferably less than 0.2 wt% (on dry matter). The protein isolate or protein composition of the invention will preferably have a solubility of at least 30 NS%, preferably at least 50 NS%, more preferably at least 60 NS%, even more preferably at least 70 NS% and most preferably at least 75 NS%. The protein isolate or protein composition of the invention preferably have a dry matter content of at least 70 wt%, preferably at least 80 wt%, more preferably at least 85 wt%, even more preferably at least 90 wt%, still more preferably at least 91 wt%,even still more preferably has a dry matter content of 92 to 99 wt% and most preferably of 93 to 98 wt%.

The protein isolate or protein composition of the invention preferably comprises rapeseed, sunflower or soy protein. In case of rape seed the protein isolate or protein composition of the invention will preferably have 2S protein and 12S protein present in a ratio of 1:6 to 6:1, preferably in a ratio of 1:2 to 2:1 (wt/wt on dry matter).

For three commercially available protein isolates which were not produced according to the invention a solubility of 69 NS%, 55 NS% and 67 NS%, respectively, were measured.

## Detailed description of the invention

Protein isolates or concentrates derived from plants or oilseed and intended for consumption share one main problem for the industrial processor or formulator namely the presence of anti-nutritional factors like phenolic compounds that are present in the source material. Phenolic compounds are ubiquitous in the oilseeds like soy, sunflowers and rapeseed and are responsible for colouring, off taste and off flavour of the protein isolates. Therefore, there is a need to remove or decrease unwanted compounds like phenolic compounds down to the trace levels in the final products especially in case of intended use for (human) consumption.

One of the methods to remove phenolic compounds from protein formulations is to wash them out with water-soluble solvents like methanol, acetone, ethanol etc. Different approaches are possible, for example pre-processing, such as applying a solvent leaching step prior to extraction of the proteins or post-processing, such as washing of the protein isolates after extraction or isolation.

The process of the invention provides inclusion of solvent treatment after the extraction of protein but before isolation of protein isolates takes place. The inventors have found that in general proteins can be purified from unwanted compounds such as phenolic compounds by bringing the protein in aqueous solution. Preferably the protein is purified from the low molecular compounds like carbohydrates and other compounds such as part of the phenolic compounds, present in the crude extract. Such purification can for example be achieved by diafiltration in an UF (UltraFiltration step). The inventors observed that a substantial part of the phenolic compounds present in the crude extract can be removed by for example UF, but not all. Still, there are some phenolic compounds left in the protein isolate that cannot be removed by for example diafiltration. In literature this phenomenon has been observed with sunflowers.

A possible explanation might be that these phenolic compounds are embedded in the protein tertiary structures and are attached to the hydrophobic epitopes of proteins by weak attraction forces. According to the present invention the proteins are preferably maintained as native or non-denatured proteins by selecting suitable processing conditions prior to application of a solvent. In general it is important to prevent phenolic compounds to form irreversible complexes with proteins. These complexes might be formed under certain conditions such as the presence of dissolved oxygen, a pH of above 8 and/or an elevated temperature higher than 60 °C.

The isolation of protein according to the invention can be achieved by adding the water soluble solvent ethanol to the aqueous solution preferably at the same time stirring. Attraction forces between phenolic compounds and the proteins will be weakened by the presence of ethanol, allowing dissociation of the phenolic compounds from the amino-acid chains. These phenolic compounds will subsequently diffuse into the bulk of the liquid phase. To minimize risk for irreversible denaturation, temperature is preferably kept in the range of 0 to 30 °C, preferably 0 to 20 °C. However, the present invention does not stand or fall with this explanation or hypothesis which is only posed by the inventors to make the process steps easy understandable rather than to limit the scope of the present invention.

To achieve this effect in for example rapeseed proteins, the ethanol content in the final mother liquor is between 60 and 80 vol%, more preferably between 65 and 75 vol%. If this content is significantly lower, the purification is less effective. If this content is higher, the protein might undergo faster denaturation and the efficiency of purification is less optimal.

In WO 02/060273 it was suggested that exposure of sunflower protein to an ethanol solution of more than 40% ethanol may lead to denaturation of proteins. We have surprisingly found that rapeseed protein isolated in 70 vol% ethanol solution and subsequently dried remained native protein and preserved their functional properties relevant for food applications such as: foaming ability, solubility, water binding ability etc.

The process of the invention when used for sunflower seed provided protein isolates with high yield, high purity and low content of phenolic compounds. This protein isolate also showed good functional properties, giving support to our explanation or hypothesis.

Throughout the present specification and the accompanying claims, the words "comprise" and "include" and variations such as "comprises", "comprising", "includes" and "including" are to be interpreted inclusively. That is, these words are intended to convey the possible inclusion of other elements or integers not specifically recited, where the context allows.

The articles "a" and "an" are used herein to refer to one or to more than one (i.e. to one or at least one) of the grammatical object of the article. By way of example, "an element" may mean one element or more than one element.

Rapeseed (*Brassica napus*), also known as rape, oilseed rape, rapa, rappi, rapaseed (and in the case of one particular group of cultivars, canola) is a bright yellow flowering member of the family *Brassicaceae* (mustard or cabbage family), (Wanasundara, 2011). The proteins present in rapeseed comprise 2S protein (monomeric protein such as napin) and 12S protein (hexameric protein such as cruciferin). In native kernel about 7 wt% 2S, 2 wt% 7S and 12 wt% 12S protein is present.

The cultivated sunflower (*Helianthus annuus L.*) is one of the 67 species in the genus *Helianthus* and is a member of the Compositae (Asteraceae) family. The proteins present in sunflower consist of two major classes, the 11S globulin (such as helianthinin) and the 2S sunflower albumins. In sunflower seeds about 60% of the proteins consist of 11S protein, while the 2S sunflower albumins account for about 20% of the proteins.

Soybeans contain about 40% protein on dry matter (DM). Based on their sedimentation coefficients soybean proteins can be classified into 2S (13-18%), 7S (30-46%), 11 S (36-53%), and 15S (0-4%) fractions. The 11 S and 15S fractions consist of glycinin and glycinin polymers respectively. The majority of the 7S fraction is β-conglycinin. The 2S fraction consists of Bowman-Birk and Kunitz trypsin inhibitors, cytochrome c, and α-conglycinin.

Processing of rapeseed for oil production provides rapeseed meal or oil cake as by-product from crushing, expelling and optionally extracting oil from oilseed rape and is in general in meal form. By "oil cake" is meant the product after crushing and expelling. By "meal" is meant that at least part of the oil removed, for example by extraction, from the oil cake. The oil cake and meal by-product has a high-protein content. Other oil seeds give similar meal or oil cake as by-product.

It is the object of the present invention to provide a process to isolate native protein from an oilseed meal or oilseed oil cake comprising protein and polyphenolic compounds. Therefore the process of the present invention comprises the following steps:

- extracting the meal with water to obtain an aqueous solution;
- concentrating the aqueous extract to an aqueous solution comprising 5 to 30 wt% protein, preferably 10 to 30 wt% protein;
- adding a water-soluble solvent to the concentrated aqueous solution to obtain a protein precipitate, whereby the water soluble solvent is ethanol and which ethanol is added to a final content between 60 and 80 vol%; and
- separating the protein precipitate from the liquid fraction.

Advantageously the process may further comprise one or a combination of the additional or subsequent steps of

- washing the protein precipitate; and
- drying the protein precipitate.

In a preferred embodiment of the invention after the extraction step and before the addition of the water-soluble solvent, the aqueous solution or concentrated aqueous solution is diafiltrated preferably by using UF (ultra filtration). During this diafiltration step soluble carbohydrates, glucosinolates or their derivatives, phytates or polyphenolic compounds or a combination of one or more of these compounds may be removed from the aqueous solution or concentrated aqueous solution. This diafiltration takes place before, during or after concentrating the aqueous extract. The diafiltration may be done separate from the concentration step or may be combined with the concentration step, for example by using UF.

The water soluble solvent is ethanol. Preferably the liquid fraction after separation comprises polyphenolic compounds.

The present invention discloses a process for the production of isolated <u>native</u> oilseed protein or a native oilseed protein composition in a way that is economical attractive and at the same time is sustainable because of the use of recyclable compounds like water and the water-soluble solvents ethanol which may give rise to the production of food grade protein products.

The dried protein precipitate or protein isolate has a protein content of at least 80 wt%. Protein content is determined on dry matter basis by the Kjeldahl method. A protein isolate is an isolated protein fraction of oil seed meal, wherein the isolate has greater than or equal to 80 wt%, preferably at least 90 wt% protein content on dry matter. Typically, the protein isolate has 92 to 99 wt% protein content on dry matter. Typically, the non-protein content of the protein isolate includes non-protein compounds such as anti-nutritional substances, fat, fiber, and other components. Examples of oilseed meal include seed cake, defatted meal or protein- enriched meal. The meal is a meal of an oil seed such as rape seed, soy bean, sunflower seed, coconut, traditional flax, linola or mustard seed, preferably the meal is rape seed meal. Although the process of the invention is disclosed herein in more detail for particularly rape seed meal, the present invention may be applied to other oil seed meals as well. The meal may be any meal resulting from the removal of oil from seed with varying levels native (non-denatured) protein, resulting, for example, from hot or cold oil extrusion methods. By native or non-denatured protein is meant protein that has retained to a large extent its functional properties which are relevant for applications in food industry such as:

- solubility in aqueous solutions,
- water-binding capacity,
- fat-binding capacity and/or
- foaming ability.

The meal is the by-product after the pressing or extraction of the oil from the oil seed or oil cake. The product of the process of the invention can be used for human consumption. It is advantageous that the conditions in the processes used to isolate the oil from the oil seed do not result in the substantial denaturation of the protein present in the oil seed or meal. Preferably conditions are chosen that will result in the preservation of the nativity and functionality of the proteins in the meal. An example of mild conditions is the cold-pressing of oil seed such as rapeseed. Mild conditions during oil isolation as well as the conditions of the present process will result in a protein product that has a high functionality and therefore has a high value for human consumption. It was found that the protein isolate produced by the process of the present invention is native (non-denatured) protein. Advantageously the process of the invention results in protein whereby the native protein content of the produced protein is substantial. Native protein content is the fraction of native protein present in a protein (in wt%).

Suitable conditions for the aqueous extraction of protein from the meal are a temperature of between 8 and 80 °C and preferably between 10 and 55 °C. In general the pH is in between 5 and 10, preferably between 6 and 8.

The extraction of the protein from the oil seed meal is carried out in any convenient manner consistent with effecting a continuous extraction of protein from the oil seed meal, such as by passing the mixture of oil seed meal and food grade aqueous solution through a conduit having a length and at a flow rate for a residence time sufficient to effect the desired extraction.

Alternatively, the extraction may be effected in a stirred tank into which the mixture of oil seed meal and aqueous solution is continuously or discontinuously fed and from which the aqueous protein solution is continuously or discontinuously removed. In addition, the procedure may be effected in a semi-continuous manner equivalent to continuous wherein a mixture of oil seed meal aqueous solution is, fed into a first stirred vessel in which the extraction is effected to form the aqueous protein solution while aqueous protein solution is continuously fed from a second stirred vessel to the residual meal separation step described below. When the aqueous protein solution has been formed in the first vessel and the second vessel has been depleted of aqueous protein solution, the first vessel then becomes the first vessel and vice versa.

The aqueous phase or solution resulting from the extraction step may be separated from the residual meal in any convenient manner, such as by employing filtration and/or centrifugation to remove residual meal. The separated residual meal may be dried.

The aqueous phase or aqueous solution may be used as such in the next step (addition of the water-soluble solvent ethanol) or preferably may be concentrated before the next step of addition of the water-soluble solvent ethanol. The concentration step may be effected in any convenient manner consistent with a (semi) continuous or batch (discontinuous) operation, such as by employing any convenient selective membrane technique, such as ultrafiltration (UF), to permit the desired degree of concentration of the aqueous protein solution. Advantageously, before, after or during the concentration step, diafiltration may be performed. This diafiltration takes place after the extraction step and before the addition of the water-soluble solvent. UF may be used for diafiltration. So UF may be used for diafiltration as well as concentration, or UF may be used for diafiltration and the concentration step is done separately. By using UF for the diafiltration, most of the soluble carbohydrates and ANF's (antinutritional factors like glucosinolates and their derivatives, phytates and most of the polyphenolic compounds) present in the aqueous extract can be advantageously removed.

The concentration step may be effected at any convenient temperature, generally 20 to 80 °C, and for the period of time to effect the desired degree of concentration. The temperature and other conditions used to some degree depend upon for example the membrane equipment used to effect the concentration and the desired protein concentration of the solution.

In the step wherein the water-soluble solvent ethanol is added, preferably a water-soluble solvent of at least 90 vol% of solvent is used, preferably at least 92 vol% of solvent. So in the step wherein ethanol is added, preferably at least 90 vol% ethanol is used, preferably at least 92 vol%. Water-soluble solvent ethanol addition is needed to obtain a concentration of the water-soluble solvent ethanol that is high enough to precipitate the protein present. A concentration of about 70 vol% ethanol is sufficient to precipitate the protein.

Separation of the protein precipitate and the liquid fraction can be done in any suitable separator such as by employing filtration and/or centrifugation. The liquid fraction will contain mainly anti-nutritional compounds (such as phytates, phenolics and glucosinolates) and sugars in case rape seed meal is used as starting meal. In case a diafiltration step is used as described before, only remainders of these compounds may be present. The precipitate mainly comprises 2S protein (napins or albumins) and 12S protein (cruciferins or globulins), when originating from rapeseed.

The precipitate can be washed for example with a water / water-soluble solvent such as ethanol solution containing less than 70 vol% water-soluble solvent, preferably comprising 50 to 70 wt% water-soluble solvent, more preferably 50 to 70 vol% ethanol, even more preferably 50 to 65 vol% ethanol and most preferably 50 to 60 vol% ethanol.

The precipitate can be dried to remove residual water-soluble solvent such as ethanol to the level of preferably less than 0.2 wt%, preferably less than 0.1 wt% water-soluble solvent such as ethanol. In general the protein isolate or protein composition obtained by the process of the present invention has a purity of more than 90 wt% (on dry matter). (Poly)phenolic compounds are present in a concentration of less than 0.1 wt%, preferably less than 0.05 wt%, more preferably less than 0.02 wt% and most preferably less than 0.01 wt% (on dry matter). The protein isolate or protein composition may be dried in any convenient manner, such as by spray drying, fluidized bed drying, freeze drying or vacuum drum drying, to a dry form, to provide a dry protein isolate having a protein content of at least 70 wt%, preferably at least 80 wt%, more preferably at least 85 wt% and even more preferably at least 90 wt%. Preferably the dry protein isolate or protein composition has a dry matter content of at least 70 wt%, preferably at least 80 wt%, more preferably at least 85 wt% and even more preferably at least 90 wt%, still more preferably at least 91 wt%, even still more preferably has a dry matter content of 92 to 99 wt% and most preferably of 93 to 98 wt%. In general the temperature of the protein isolate is kept below 60 °C during drying.

According to one object of the invention the protein isolate obtained with the process of the present invention, is suitable for human consumption. The removal of phytates, phenolics (or plypenolics) and glucosinolates prevents unattractive flavor and coloration and decreased nutritional value of the protein isolate. At the same time this removal enhances the protein content of the protein isolate.

Liquids having different amounts of water-soluble solvent such as ethanol are used in the present process. The skilled person will understand that several of the water-soluble solvent like flows in the process can be re-circulated, can be used again in other parts of the process or can be re-used after processing for example after distilling to increase the solvent content. The skilled person will appreciate that an optimal use of water-soluble solvent such as ethanol can be designed and less as possible of water-soluble solvent such as ethanol will be "consumed" in the process in order to obtain a sustainable process.

Methods and Materials

*Protein content*

Protein content was determined by the Kjeldahl method according to AOAC Official Method 991.20 Nitrogen (Total) in Milk. A converstion factor of 6.25 was used to determine the amount of protein (% (w/w)).

*Moisture content*

The moisture content was determined according to the: Food Chemical Codex, edition 7, General tests and assays, Appendix II, pages 1133 - 1134

*Total ash content*

The total ash content was determined according to the Food Chemical Codex edition 7, General tests and assays, Appendix II, C, page 1746 .

*Phytate content*

The phytate content was based on the phytase assay described in the Food Chemical Codex (FCC 7, General tests and assays, appendix V, pages 1207 - 1208. Reagents and solutions used are similar with the exception of the acetate buffer, which additionally contains 1% (v/v) Tween 20. In stead of the substrate solution, a reference phytate solution containing 10 mM phytate in acetate buffer was used. A solution containing 1.25 Phytase units/ml in acetate buffer was used for conversion of phytate. A phytate calibration line has been created in the range of 0.1 to 0.5 mM phytate. For all samples and standards, incubation was performed at 37°C for 120 minutes. Content of phytate in the samples has been derived directly from the relation for the phytate standard between the phytate concentration and the absorption after the reaction at 415 nm

*Nitrogen solubility (NS%)*

Protein solutions were prepared by dissolving protein powder at a protein concentration of 2% (w/w) in demineralized water. pH was adjusted to 8.0 with 4M HCl or 4M NaOH..

(No additional salt was added).

Solutions were incubated for 2 hour at 50°C while vigorous shaking. Subsequently, samples were centrifuged at 20.000 g for 5 min and supernatant was collected. The protein content of the supernatant and the protein powder samples was analyzed by the Kjeldahl method. Nitrogen solubility (NS%) was defined as:

$$NS\% = \frac{nitrogen\ in\ the\ supernatant\ (mg)}{total\ nitrogen\ in\ a\ 100\ mg\ sample} \times 100\%$$

*Polyphenol or phenolic content*

The polyphenol or phenolic concentration was determined using a UPLC-UV method for the quantification of sinapic acid and its analogs. The method is based on the analysis of potato phenolics described by Narváez-Cuenca et al. Journal of Agricultural and Food Chemistry, 2011, 59 (10247-10255) with minor adaptations as described below.
An Acquity UPLC (Waters) system was equipped with an Acquity UPLC BEH C18 column (1.7 $\mu$m, 2.1 x 150 mm, Waters) using a PDA detector at 320 nm for detection. Mobile phase A consisted of 0.1 % formic acid in water and mobile phase B consisted of 0.1 % formic acid in acetonitril applying a flow of 0.4 mL/min in gradient mode. Column temperature was set at 30° C and injection volume was 2 $\mu$L.
Sinapic acid was used as reference standard (calibration curve 0.1-100 mg/L) dissolved in 50 vol% methanol containing 0.5 wt% acetic acid. Approximately 1.0 g of sample was dissolved in 10 mL 70 vol% methanol and subsequently mixed for 1 h. An aliquot was transferred into an Eppendorf tube, centrifuged for 10 min at 14,000 rpm and the supernatant was diluted 1:1 with 50 vol% methanol containing 0.5 wt% acetic acid. The polyphenol concentration was calculated by determining the total peak area of sinapic acid and its analogs by interpolation with the sinapic acid calibration curve. Total polyphenol concentration was expressed as wt%.

*Carbohydrate content*:

Total carbohydrate concentration was determined by the phenol-sulphuric acid analysis which has been described by Rao et al. Anal. Biochem. 181 (1989), pp. 18-22. The method includes the degradation of the polysaccharide fraction via acid hydrolysis with sulphuric acid (approximately 70 %) into monosaccharides (e.g. glucose, mannose) at elevated temperature. In this acidic environment, the monosaccharides are subsequently dehydrated and converted into 2-furaldehydes, also called furfurals. In the acidic environment, phenol is protonized, leaving a reactive molecule which will react with the furfural molecules. The condensation product is highly conjugated and chromogenic. The intensity of the orange colour can be measured spectrophotometrically at 490 nm.

The colour of this compound corresponds to the amount of mono-saccharide present.

The actual content has been derived from a calibration curve produced using glucose as standard.

*Fat content*

The fat content was determined according to the method of AOCS 6th edition, Ce 1-62

*Glucosinolate content*

The glucosinolate content was determined according to the COMMISSION REGULATION (EEC) No 1864/90 of 29 June 1990 amending Regulation (EEC) No 1470/68

*Ethanol content (of the product or the composition of the invention)*

The ethanol content was determined with use of a GC headspace analysis. 25 mg of the sample and 1.5 g sodiumchloride were put into a glass vial with cap. The sample was suspended into 1 ml water and the vial was closed. At a temperature of 60 °C after the headspace equilibrium was reached, 1 ml of the headspace was injected onto a gaschromatograph by means of a split injection 1:20.

The gaschromatograph was equipped with a DB 624 column (60 m x 0.25 mm i.d, film 1.2 $\mu$m) and a flame ionization detector. Nitrogen gas was used as the carrier gas with a flow of 3 ml/min. The temperature of the column was initially set at 50 °C, followed by a linear temperature gradient of 30 °C/min to 200 °C, at which value it was held for 6 min. Ethanol was measured with the flame ionization detector and the Chromeleon was employed for data processing. The retention of ethanol on this system was determined by injecton of a standard ethanol. The quantity of ethanol in the sample was determined by the use of standard addition of ethanol to the sample in a suitable range.

*Determination of protein content of S fraction, for example the 2S and 12S protein content in rape seed protein*

The content of the S fractions was determined using Size Exclusion Chromatography, with commercially purified rapeseed proteins as reference. Protein samples have been dissolved in the eluent, 0.1 M NaCl solution. Separation was performed on a Waters BEH200 column (1.7 $\mu$m, 4.6X 150 mm), at 40°C and 0.5 ml/min. Detection of the protein peaks was performed using UV absorption at 280 nm and refractive index. Quantification of content of the S fractions was performed based on the area of the main peaks in the chromatograms of the reference proteins.

## Example 1

1 kg of two times pressed rapeseed cake was suspended with 5 liters of water. During mixing, pH was adjusted to 7 using a sodium hydroxide solution. The extraction was done at a controlled temperature of 30 °C for 1 hour under stirring. The solid liquid separation was performed for 30 minutes at approximately 4000 g at ambient temperature (22 °C). The supernatant was collected by decanting and sieving (0.15 - 0.25 mm sieve) to remove the fatty top layer.

The concentration of the aqueous extract was performed using a 10 kD ultrafiltration (UF) module and a pump. The concentrate was approximately ten times concentrated in view of the supernatant before concentrating. The concentrate was washed 3 times with water (volume ratio concentrate : water = 1 : 3) and the washed concentrate was collected from the UF unit. The membrane was washed with some water to increase protein yield and the final concentration factor was approximately four times.

Ethanol Induced precipitation was performed by adding food grade concentrated ethanol (95%) to the washed concentrate to a final concentration of 70 vol% ethanol (volume ratio concentrate : ethanol = 1 : 2.3). During the addition of ethanol, the mixture was thoroughly mixed. The precipitate was removed after centrifugation (15 min 4000 g at ambient temperature) and was resuspended in 70 vol% ethanol (weight ratio of 1 : 5). After centrifugation (15 min 4000 g at ambient temperature) the pellet was dried in a vacuum incubator (120 mbar, 45 °C) to result in 210 g rape seed protein having a dry matter content of 93.6% dry matter.

**Example 2. Lab scale, extraction at 30°C**

A lab scale experiment including ethanolic precipitation (Ethanol Induced Precipitation = EIP) with rapeseed cake extracted at 30°C was.
1500 g of rapeseed cake was suspended in 7500 g process water. pH was adjusted to 7 by the addition of 70 g 4 N NaOH. Extraction was performed for 90 minutes at 30°C under mediate stirring using an overhead stirring device and a folded blade stirrer in a 10 l vessel. Starting temperature of the rapeseed suspension was directed to 30°C via the use of preheated water prior to the addition of rapeseed cake.
Separation of fat, solids and liquid phase was performed using a swing out centrifuge (4000 g, 30 minutes, 10°C). The fatty top layer was separated from the aqueous phase by pouring the extract over a sieve (0.25 mm).
The aqueous fraction was concentrated and washed at room temperature using a pump and a 10 kD membrane. Trans membrane pressure applied was 1 bar. Washing was performed after concentrating the aqueous fraction from 6342 g to 400 g with 3x 3 volumes of deionized water. The final washed concentrate (1018 g) had a dry matter content of 23%.
970 g of concentrate was suspended with 2266 ml of 96 vol% ethanol of 10°C. After thorough mixing using an overhead stirring device and a folded blade stirrer, the mixture was centrifuged in a swing out centrifuge (4000 g, 10 minutes, 10°C). The pellet was resuspended in 1440 ml 70 vol% ethanol of 10°C and, after thorough mixing, centrifuged again. The pellet after crumbling with a spoon was dried. The dried material was further homogenized and reduced in size using an IKA M20 mixer.

Table 2. Composition of fractions in lab scale processing of rapeseed at 30°C

| Sample | Dry matter (%) | Protein (% on DM) | Fat (% on DM) | Phenolics (% on DM) | Phenolics Yield (%) |
|---|---|---|---|---|---|
| Rapeseed cake | 90 | 38 | 19 | 1.5 | 100 |
| Aqueous extract | 7.7 | 53 | 5.6 | 2.2 | 53 |
| Washed concentrate before EIP | 22 | 87 | 9.5 | 0.24 | 2.7 |
| Washed concentrate after EIP and drying | 93 | 86 | 6.4 | 0.01 | 0.02 |

**Example 3. Lab scale, extraction at 15°C**

A lab scale experiment including ethanolic precipitation with rapeseed cake extracted at 15°C was performed.
800 g of rapeseed cake was suspended in 4000 g process water. pH was adjusted to 7 by the addition of 35 g 4 N NaOH. Extraction was performed for 30 minutes at 15°C under mediate stirring using an overhead stirring device and a folded blade stirrer in a 10 l vessel with a jacket connected to a water bath. Starting temperature of the rapeseed suspension was directed to 15°C via the use of cold water prior to the addition of rapeseed cake.
Separation of fat, solids and liquid phase was performed using a swing out centrifuge (4000 g, 30 minutes, 10°C). The fatty top layer was separated from the aqueous phase by pouring the extract over a sieve (0.25 mm).
The aqueous fraction was concentrated and washed at 15°C using a pump and a 10 kD membrane. Trans membrane pressure applied was 1 bar. Washing was performed after concentrating the aqueous fraction from 3193 g to 519 g (dry matter content 19%) with 3x 3 volumes of deionized water.
496 g of concentrate was suspended with 1165 ml of 96 vol% ethanol of 10°C. After thorough mixing using an overhead stirring device and a folded blade stirrer, the mixture was centrifuged in a swing out centrifuge (4000 g, 10 minutes, 10°C). The pellet was resuspended in 1000 ml 70 vol% ethanol of 10°C and, after thorough mixing, centrifuged again. The pellet after crumbling with a spoon was dried. The dried material was further homogenized and reduced in size using an IKA M20 mixer.

Table 3. Composition of fractions in lab scale processing of rapeseed extracted at 15°C

| Sample | Dry matter (%) | Protein (% on DM) | Fat (% on DM) | Phenolics (% on DM) | Phenolics Yield (%) |
|---|---|---|---|---|---|
| Rapeseed cake | 92 | 38 | 17 | 1.8 | 100 |
| Aqueous extract | 6.4 | 50 | 5.2 | 2.8 | 43 |
| Washed concentrate before EIP | 19 | 79 | 7.3 | 0.91 | 6.6 |
| Washed concentrate after EIP and drying | 90 | 87 | 6.3 | 0.06 | 0.04 |

The nitrogen solubility of the washed concentrate after EIP and drying was 74%

**Example 4. Lab scale, extraction at 50°C**

A larger scale lab experiment including ethanolic precipitation with rapeseed cake extracted at 50°C was performed in three experiments.
In 3 separate experiments, in total 4800 g of rapeseed cake was suspended in 24000 g process water. pH was adjusted to 7 by the addition of 212 g 4 N NaOH. Extraction was performed for 30 minutes at 50°C under mediate stirring using an overhead stirring device and a folded blade stirrer in a 10 l vessel. Starting temperature of the rapeseed suspension was directed to 50°C via the use of water at 60°C prior to the addition of rapeseed cake.
After the incubation the temperature of the rapeseed suspension was decreased to 15°C by exchanging the water in the water bath for ice cold water. Cooling period was approximately 30 minutes.
Separation of fat, solids and liquid phase was performed using a swing out centrifuge (4000 g, 30 minutes, 10°C). The fatty top layer was separated from the aqueous phase by pouring the extract over a sieve (0.25 mm).
The aqueous fraction (3 batches) was concentrated and washed at 50°C using a pump and a 10 kD membrane. Trans membrane pressure applied was 2.5 bar. Washing was performed after concentrating the aqueous fraction from 6000 g to 600 g with 3x 3 volumes of deionized water.
1000 g of washed concentrate was suspended with 2300 ml of 96 vol% ethanol of 10°C. After thorough mixing using an overhead stirring device and a folded blade stirrer, the mixture was centrifuged in a swing out centrifuge (4000 g, 10 minutes, 10°C). The pellet was resuspended in 2000 ml 70 vol% ethanol of 10°C and, after thorough mixing, centrifuged again. The pellet after crumbling with a spoon was dried. The dried material was further homogenized and reduced in size using an IKA M20 mixer.

Table 4. Composition of fractions in lab scale processing of rapeseed extracted at 50°C

| Sample | Dry matter (%) | Protein (% on DM) | Fat (% on DM) | Phenolics (% on DM) | Phenolics Yield (%) |
|---|---|---|---|---|---|
| Rapeseed cake | 92 | 38 | 19 | 1.8 | 100 |
| Aqueous extract | | | | | |
| Experiment 1 | 7.2 | 52 | 6.1 | 2.6 | 43 |
| Experiment 2 | 7.3 | 50 | 6.5 | 2.5 | 42 |
| Experiment 3 | 7.4 | 51 | 7.1 | 2.3 | 39 |
| Washed concentrate | | | | | |
| Experiment 1 | 20 | 86 | 10 | nd | nd |
| Experiment 2 | 19 | 85 | 11 | 0.16 | 1.2 |
| Experiment 3 | 25 | 88 | 9.8 | 0.12 | 0.9 |
| Washed concentrate after EIP and drying | | | | | |
| Experiment 1 | 93 | 87 | 9.7 | < 0.01 | <0.1 |
| Experiment 2 | 96 | 89 | 9.5 | < 0.01 | <0.1 |
| Experiment 3 | 95 | 88 | 8.5 | 0.01 | 0.1 |

The nitrogen solubility of the washed concentrate after EIP and drying (mixture of experiment 1, 2 and 3) was 74%.

**Example 5. Pilot scale, extraction at 50°C**

Rapeseed cake was extracted at 50°C on pilot scale. Further processing of the washed concentrate was performed on lab scale. 60 kg of rapeseed cake was suspended in 300 kg of water. pH was adjusted to 6 by the addition of 2.625 kg 1 N NaOH. Extraction was performed at 50°C under stirring using an overhead stirring device and a small folded blade stirrer in a 500 l vessel. Water was boiled and cooled to 60°C prior to the addition of rapeseed cake. The incubation lasted for 2 hours due to the limiting capacity of the decanter used (300 kg/hr).

After the decanter, the temperature of the extract was decreased to 15°C via a heat exchanger. Separation of fat and liquid phase was performed using a continuous disc stack centrifuge. Volume of the fatty side stream was 10% of the total volume.

The aqueous fraction was concentrated and washed at 50°C using an ultrafiltration device with a 10 kD ceramic membrane. Trans membrane pressure applied was 2.5 bar. Washing after concentration was performed continuously with 4 volumes of deionized water.

To 10 kg of washed concentrate (dry matter content 16%), 23 l of ethanol (96 vol%, 10°C) was added slowly under stirring. The mixture at 70 vol% ethanol was centrifuged in a swing out centrifuge (4000 g, 10 minutes, 10°C). The pellet was resuspended in 4 l of 70 vol% ethanol of 10°C and, after thorough mixing, centrifuged again. The pellet after crumbling with a spoon was dried. The dried material (1230 g of 97% dry matter) was further homogenized and reduced in size using an Alpine mill (sheet 1 mm mesh).

Table 5. Composition of fractions in pilot scale processing of rapeseed extracted at 50°C

| Sample | Dry matter (%) | Protein (% on DM) | Fat (% on DM) | Phenolics (% on DM) | Phenolics Yield (%) | Phytate (% on DM) |
|---|---|---|---|---|---|---|
| Rapeseed cake | 92 | 38 | 17 | 1.7 | 100 | 2.5 |
| Aqueous extract after decreaming | 8 | 48 | 12 | 2.6 | 39 | Nd |
| Washed concentrate | 16 | 74 | 19 | 0.29 | 1.4 | Nd |
| Washed concentrate after EIP and drying | 97 | 72 | 14 | 0.05 | 0.18 | 0.14 |

The nitrogen solubility of the washed concentrate after EIP and drying was 81%.

**Example 6. Ethanolic precipitation of sun flower cake**

To show the effect of ethanolic precipitation for other oil seeds than rapeseed, the process was performed with sun flower cake (after 1 x pressing).

1600 g of milled sun flower cake was suspended in 8000 g process water. Endogenous pH was 7 so no adjustment was applied. Sulfite was added (1 g/l) to control microbiology and prevent oxidation of phenolic compounds. Extraction was performed for 30 minutes at 15°C under mediate stirring using an overhead stirring device and a folded blade stirrer in a 10 l vessel.

Separation of fat, solids and liquid phase was performed using a swing out centrifuge (4000 g, 30 minutes, 10°C). The fatty top layer was separated from the aqueous phase by pouring the extract over a sieve (0.25 mm).

The aqueous fraction was concentrated and washed at 15°C using a using an ultrafiltration device and a 10 kD membrane. Trans membrane pressure applied was 2.5 bar. Washing was performed after concentrating the aqueous fraction with 3x 3 volumes of deionized water.

To 200 g of washed concentrate (dry matter content 10.0%), 460 ml of ethanol (96 vol%, 10°C) was added slowly under stirring. The mixture at 70 vol% ethanol was centrifuged in a swing out centrifuge (4000 g, 10 minutes, 10°C). The pellet was resuspended in 200 ml 70 vol% ethanol of 10°C and, after thorough mixing, centrifuged again. The pellet after crumbling with a spoon was dried.

Table 6. Composition of fractions in lab scale processing at 15°C of sun flower cake

| Sample | Dry matter (%) | Protein (% on DM) | Fat (% on DM) | Phenolics (% on DM) | Phenolics Yield (%) |
|---|---|---|---|---|---|
| Sun flower cake | 93.2 | 30 | 32 | 1.1 | 100 |
| Aqueous extract | 3.5 | 41 | 5.6 | 3.3 | 42 |
| Washed concentrate | 10.0 | 85 | 7.5 | 0.26 | 1.3 |
| Washed concentrate after EIP and drying | 71.5 | 89 | 5.7 | 0.01 | 0.04 |

## Example 7. Ethanolic precipitation of soy flour

A combination of cold and ethanolic precipitation with full fat enzyme active soy flour was performed. 1600 g of milled sun flower cake was suspended in 8000 g process water. Endogenous pH was 6.8 so no adjustment was applied. Sulfite was added (1 g/l) to control microbiology and prevent oxidation of phenolic compounds. Extraction was performed for 30 minutes at 15°C under mediate stirring using an overhead stirring device and a folded blade stirrer in a 10 l vessel.

Separation of fat, solids and liquid phase was performed using a swing out centrifuge (4000 g, 30 minutes, 10°C). The fatty top layer was separated from the aqueous phase by pouring the extract over a sieve (0.25 mm).

The aqueous fraction was concentrated and washed at 15°C using a pump and a 10 kD membrane in a thermo stated vessel. Trans membrane pressure applied was 2.5 bar. Washing was performed after concentrating the aqueous fraction with 3x 3 volumes of pre-heated deionized water.

To the supernatant (765 g), 1780 ml (1419 g) of ethanol (96 vol%) of 10°C was added slowly under stirring. The mixture at 70 vol% ethanol was centrifuged in a swing out centrifuge (4000 g, 10 minutes, <10°C). The pellet was resuspended in 1500 ml 70 vol% ethanol of 10°C and, after thorough mixing, centrifuged again. The pellet after crumbling with a spoon was dried. The dried material (189 g of 83% dry matter) was further homogenized using an IKA M20 mixer.

Table 7. Composition of fractions in lab scale processing at 15°C of full fat enzyme active soy flour

| Sample | Dry matter (%) | Protein (% on DM) | Fat (% on DM) | Phenolics (% on DM) | Phenolics Yield (%) |
|---|---|---|---|---|---|
| Soy flour | 94 | 42 | 24 | 0.08 | 100 |
| Aqueous extract | 10 | 53 | 14 | 0.11 | 71 |
| Washed concentrate before EIP | 26 | 65 | 16 | 0.05 | 20 |
| Washed concentrate after EIP and drying | 83 | 74 | 14 | < 0.01 | 0.3 |

## Example 8. Pretreatment of rapeseed cake with isohexane or ethanol

To show the effect of pretreatment of rapeseed cake after pressing on removal of phenolic compounds, an experiment has been performed comparing aqueous extraction of rapeseed cake with isohexane or 70 vol% ethanol and without pretreatment. The results show the specific effect of ethanol on phenolics removal compared to water and a non water miscible solvent.

Isohexane pretreatment:

1000 g of rapeseed cake was extracted using 5 l of isohexane. After 1 hour of incubation at room temperature, solid - liquid separation was performed by filtration. Weight of the pellet after drying was 831.5 g, dry matter was 92.5%.

The isohexane pretreated rapeseed cake was suspended in 4332 g process water. pH was adjusted to 7 pH by the addition of 62.72 g 4 N NaOH. Extraction was performed at 30°C under stirring using an overhead stirring device and a small folded blade stirrer in a 10 l vessel.

Ethanol pretreatment:

1000 g of rapeseed cake was extracted using 5 l of 70 vol% ethanol. After 1 hour of incubation at 30°C, solid - liquid separation was performed by centrifugation (4000 g, 30 minutes, 20°C). Weight of the pellet after drying was 844.2 g, dry matter was 86.0%.

The ethanol pretreated rapeseed cake was suspended in 4309 g process water. pH was adjusted to 7 pH by the addition of 30.73 g 4 N NaOH. Extraction was performed at 30°C under stirring using an overhead stirring device and a small folded blade stirrer in a 10 l vessel.

Non pretreated rapeseed cake:

1000 g of rapeseed cake was suspended in 5000 g process water. pH was adjusted to 7 by the addition of 40.66g 4 N NaOH. Extraction was performed for 60 minutes at 30°C under mediate stirring using an overhead stirring device and a folded blade stirrer in a 10 l vessel.

For all 3 suspensions, separation of fat, solids and liquid phase was performed using a swing out centrifuge (4000 g, 30 minutes, 10°C). The fatty top layer was separated from the aqueous phase by pouring the extract over a sieve (0.25 mm).

The aqueous fraction was concentrated and washed at room temperature using a pump and a 10 kD membrane in a 2 l vessel. Trans membrane pressure applied was 1 bar. Washing was performed after concentrating the aqueous fraction from 4000 g to 600 g with 3x 3 volumes of deionized water.

Table 8. Composition of fractions in lab scale processing of pretreated rapeseed cake at 30°C

| Sample | Dry matter (%) | Protein (% on DM) | Fat (% on DM) | Phenolics (% on DM) | Phenolics Yield (%) |
|---|---|---|---|---|---|
| Rapeseed cake untreated | 91 | 37 | 19 | 1.5 | 100 |
| Aqueous extract | 7.7 | 54 | 5.5 | 2.0 | 46 |
| Washed concentrate | 20 | 85 | 9.8 | 0.18 | 3.8 |
| Rapeseed cake isohexane extracted | 93 | 45 | 4.9 | 1.8 | 96 |
| Aqueous extract | 8.2 | 54 | 2.5 | 2.0 | 42.3 |
| Washed concentrate | 18 | 92 | 4.7 | 0.20 | 1.8 |
| Rapeseed cake ethanol extracted | 86 | 40 | 20 | 0.22 | 21 |
| Aqueous extract | 4.6 | 69 | 2.5 | 0.55 | 6.0 |
| Washed concentrate | 13 | 93 | 3.8 | 0.02 | 0.1 |

**Example 9. Lab scale, extraction at 30°C**

1500 g of rapeseed cake was suspended in 7500 g process water. pH was adjusted to 7 by the addition of 59 g 4 N NaOH. Extraction was performed for 60 minutes at 30°C under mediate stirring using an overhead stirring device and a folded blade stirrer in a 10 l vessel. Starting temperature of the rapeseed suspension was directed to 30°C via the use of preheated water prior to the addition of rapeseed cake. Separation of fat, solids and liquid phase was performed using a swing out centrifuge (4000 g, 30 minutes, 10°C). The fatty top layer was separated from the aqueous phase by pouring the extract over a sieve (0.25 mm).

The aqueous fraction was concentrated and washed at room temperature using a pump and a 10 kD membrane. Trans membrane pressure applied was 1 bar. Washing was performed after concentrating the aqueous fraction from 6000 g to 650 g with 3x 2.5 volumes of deionized water. The final washed concentrate (928 g) had a dry matter content of 21%.

842 g of concentrate was suspended with 2062 g of 96 vol% ethanol of 10°C. After thorough mixing using an overhead stirring device and a folded blade stirrer, the mixture was centrifuged in a swing out centrifuge (4000 g, 10 minutes, 10°C). The pellet was resuspended in 1000 ml 70 vol% ethanol of 10°C and, after thorough mixing, centrifuged again. The pellet after crumbling with a spoon was dried. The dried material was further homogenized and reduced in size using an IKA M20 mixer. The ethanol content of the washed concentrate after EIP and drying was 0.15 wt%.

**Claims**

1. A process to isolate native protein from oilseed meal or oilseed oil cake comprising the following steps:

   • extracting the meal with water to obtain an aqueous solution;
   • concentrating the aqueous extract to an aqueous solution comprising 5 to 30 wt% protein, preferably 10 to 30 wt% protein;
   • adding a water-soluble solvent to the concentrated aqueous solution to obtain a protein precipitate, whereby the water soluble solvent is ethanol and which ethanol is added to a final content between 60 and 80 vol% ; and
   • separating the protein precipitate from the liquid fraction.

2. Process according to claim 1 which comprises the additional step of washing the protein precipitate.

3. Process according to claim 1 or 2 which comprises the additional step of drying the protein precipitate.

4. Process according to any one of the claims whereby after the extraction step and before the addition of the water-soluble solvent, the aqueous solution or concentrated aqueous solution is diafiltrated preferably by using UF (ultra filtration).

5. Process according to claim 4 whereby soluble carbohydrates, glucosinolates or their derivatives, phytates or polyphenolic compounds or a combination of one or more of these compounds are removed from the aqueous solution or concentrated aqueous solution.

6. Process according to claim 4 or 5 whereby the diafiltration takes place before, during or after the concentrating of the aqueous extract.

7. A process according to any one of the previous claims wherein the meal is rapeseed, soy or sun flower meal.

8. An isolated native oilseed protein or a native oilseed protein composition which comprises

   - a protein content of at least 80 wt%, preferably at least 85 wt%, more preferably at least 90 wt%, and most preferably between 92 and 99 wt% (on dry matter);
   - an ethanol content of less than 0.2 wt%, preferably less than 0.1 wt% (on dry matter);
   - an ethanol content of more than 0.001 wt%, preferably more than 0.01 wt% (on dry matter); and
   - a phenolic content of less than 0.1 wt%, preferably less than 0.05 wt%, more preferably less than 0.02 wt% (on dry matter) expressed as sinapic acid equivalents.

9. An isolated protein or a protein composition of claim 8 which has a glucosinolate content of less than 10 $\mu$mol/g, preferably less than 1 $\mu$mol/g (on dry matter).

10. An isolated protein or a protein composition of claim 8 or 9 which has a lipid content of 2 to 15 wt%, preferably 2 to 10 wt% and more preferably 2 to 8 wt% (on dry matter) or of 2 to 20 wt%, preferably 2 to 15 wt% (on dry matter) in case of soy protein.

11. An isolated protein or a protein composition of any one of claims 8 to 10 which has a phytate content (P x 3.5) of less than 0.5 wt%, preferably less than 0.2 wt% (on dry matter).

12. An isolated protein or a protein composition of any one of claims 8 to 11 which has a solubility of at least 30 NS%, preferably at least 50 NS%, more preferably at least 60 NS%, even more preferably at least 70 NS% and most preferably at least 75 NS%.

13. An isolated protein or a protein composition of any one of claims 8 to 10 which has a dry matter content of at least 70 wt%, preferably at least 80 wt%, more preferably at least 85 wt%, even more preferably at least 90 wt%, still more preferably at least 91 wt%,even still more preferably has a dry matter content of 92 to 99 wt% and most preferably of 93 to 98 wt%.

14. An isolated protein or a protein composition of any one of claims 8 to 13 which comprises rapeseed, sunflower or soy protein.

**15.** An isolated protein or a protein composition of any one of claims 8 to 13 which comprises rapeseed and whereby the 2S protein and 12S protein will be present in a ratio of 1:6 to 6:1, preferably in a ratio of 1:2 to 2:1 (wt/wt on dry matter).

**Patentansprüche**

**1.** Verfahren zum Isolieren von nativem Protein aus Ölsaatmehl oder Ölsaat-Ölkuchen, umfassend folgende Schritte:

> • Extrahieren des Mehls mit Wasser, um eine wässrige Lösung zu erhalten;
> • Konzentrieren des wässrigen Extrakts zu einer wässrigen Lösung, die 5 bis 30 Gew.-% Protein, vorzugsweise 10 bis 30 Gew.-% Protein, umfasst;
> • Zugeben eines wasserlöslichen Lösungsmittels zu der konzentrierten wässrigen Lösung, um ein Proteinpräzipitat zu erhalten, wobei das wasserlösliche Lösungsmittel Ethanol ist, welches Ethanol auf einen Endgehalt zwischen 60 und 80 Vol.-% zugegeben wird; und
> • Abtrennen des Proteinpräzipitats von der flüssigen Fraktion.

**2.** Verfahren gemäß Anspruch 1, umfassend den zusätzlichen Schritt des Waschens des Proteinpräzipitats.

**3.** Verfahren gemäß Anspruch 1 oder 2, umfassend den zusätzlichen Schritt des Trocknens des Proteinpräzipitats.

**4.** Verfahren gemäß einem der Ansprüche, wobei nach dem Extraktionsschritt und vor dem Zugeben des wasserlöslichen Lösungsmittels die wässrige Lösung oder die konzentrierte wässrige Lösung diafiltriert wird, vorzugsweise unter Verwendung von UF (Ultrafiltration).

**5.** Verfahren gemäß Anspruch 4, wobei lösliche Kohlenhydrate, Glucosinolate oder deren Derivate, Phytate oder Polyphenolverbindungen oder eine Kombination von zwei oder mehreren dieser Verbindungen aus der wässrigen Lösung oder der konzentrierten wässrigen Lösung entfernt werden.

**6.** Verfahren gemäß Anspruch 4 oder 5, wobei die Diafiltration vor, während oder nach dem Konzentrieren des wässrigen Extrakts erfolgt.

**7.** Verfahren gemäß einem der vorstehenden Ansprüche, wobei das Mehl Raps-, Soja- oder Sonnenblumenmehl ist.

**8.** Isoliertes natives Ölsaatprotein oder natives-Ölsaatprotein-Zusammensetzung, umfassend

> - einen Proteingehalt von wenigstens 80 Gew.-%, vorzugsweise wenigstens 85 Gew.-%, bevorzugter wenigstens 90 Gew.-% und höchst bevorzugt zwischen 92 und 99 Gew.-% (Trockensubstanz);
> - einen Ethanolgehalt von weniger als 0,2 Gew.-%, vorzugsweise weniger als 0,1 Gew.-% (Trockensubstanz);
> - einen Ethanolgehalt von mehr als 0,001 Gew.-%, vorzugsweise mehr als 0,01 Gew.-% (Trockensubstanz); und
> - einen Phenolgehalt von weniger als 0,1 Gew.-%, vorzugsweise weniger als 0,05 Gew.-%, bevorzugter weniger als 0,02 Gew.-% (Trockensubstanz), ausgedrückt in Sinapinsäureäquivalenten.

**9.** Isoliertes Protein oder Proteinzusammensetzung gemäß Anspruch 8, das einen Glucosinolatgehalt von weniger als 10 $\mu$mol/g aufweist, vorzugsweise weniger als 1 $\mu$mol/g (Trockensubstanz).

**10.** Isoliertes Protein oder Proteinzusammensetzung gemäß Anspruch 8 oder 9, das einen Lipidgehalt von 2 bis 15 Gew.-% aufweist, vorzugsweise 2 bis 10 Gew.-% und bevorzugter 2 bis 8 Gew.-% (Trockensubstanz) oder von 2 bis 20 Gew.-%, vorzugsweise 2 bis 15 Gew.-% (Trockensubstanz) im Fall von Sojaprotein.

**11.** Isoliertes Protein oder Proteinzusammensetzung gemäß einem der Ansprüche 8 bis 10, das einen Phytatgehalt (P x 3,5) von weniger als 0,5 Gew.-% aufweist, vorzugsweise weniger als 0,2 Gew.-% (Trockensubstanz).

**12.** Isoliertes Protein oder Proteinzusammensetzung gemäß einem der Ansprüche 8 bis 11, das eine Löslichkeit von wenigstens 30 NS% aufweist, vorzugsweise wenigstens 50 NS%, bevorzugter wenigstens 60 NS%, noch bevorzugter wenigstens 70 NS% und höchst bevorzugt wenigstens 75 NS%.

**13.** Isoliertes Protein oder Proteinzusammensetzung gemäß einem der Ansprüche 8 bis 10, das einen Trockensubstanzgehalt von wenigstens 70 Gew.-% aufweist, vorzugsweise wenigstens 80 Gew.-%, bevorzugter wenigstens 85 Gew.-%, noch bevorzugter wenigstens 90 Gew.-%, noch bevorzugter wenigstens 91 Gew.-%, sogar noch bevorzugter einen Trockensubstanzgehalt von 92 bis 99 Gew.-% und höchst bevorzugt von 93 bis 98 Gew.-% aufweist.

14. Isoliertes Protein oder Proteinzusammensetzung gemäß einem der Ansprüche 8 bis 13, das Raps-, Sonnenblumen- oder Sojaprotein umfasst.

15. Isoliertes Protein oder Proteinzusammensetzung gemäß einem der Ansprüche 8 bis 13, das Raps umfasst und wobei das 2S-Protein und das 12S-Protein in einem Verhältnis von 1:6 bis 6:1, vorzugsweise in einem Verhältnis von 1:2 bis 2:1, vorhanden sein werden (Gew./Gew. Trockensubstanz).

## Revendications

1. Procédé d'isolement de protéine native à partir de tourteau d'oléagineux moulu ou de tourteau d'oléagineux comprenant les étapes suivantes :

   • extraction du tourteau avec de l'eau pour obtenir une solution aqueuse ;
   • concentration de l'extrait aqueux en solution aqueuse comprenant 5 à 30 % en poids de protéine, de préférence 10 à 30 % en poids de protéine ;
   • ajout d'un solvant hydrosoluble à la solution aqueuse concentrée pour obtenir un précipité de protéine, où le solvant hydrosoluble est l'éthanol et ledit éthanol est ajouté à une teneur finale comprise entre 60 et 80 % en volume ; et
   • séparation du précipité de protéine de la fraction liquide.

2. Procédé selon la revendication 1 qui comprend l'étape additionnelle de lavage du précipité de protéine.

3. Procédé selon la revendication 1 ou 2 qui comprend l'étape additionnelle de séchage du précipité de protéine.

4. Procédé selon l'une quelconque des revendications dans lequel, après l'étape d'extraction et avant l'ajout du solvant hydrosoluble, la solution aqueuse ou solution aqueuse concentrée est diafiltrée, de préférence en utilisant UF (ultrafiltration).

5. Procédé selon la revendication 4 dans lequel des glucides solubles, des glucosinolates ou leurs dérivés, des phytates ou des composés polyphénoliques ou une combinaison d'un ou plusieurs de ces composés sont enlevés de la solution aqueuse ou solution aqueuse concentrée.

6. Procédé selon la revendication 4 ou 5 dans lequel la diafiltration est conduite avant, pendant ou après la concentration de l'extrait aqueux.

7. Procédé selon l'une quelconque des revendications précédentes dans lequel le tourteau est un tourteau de colza, de soja ou de tournesol.

8. Composition de protéine oléagineuse native isolée qui comprend

   - une teneur en protéine d'au moins 80 % en poids, de préférence au moins 85 % en poids, plus préférablement au moins 90 % en poids, et de manière préférée entre toutes entre 92 et 99 % en poids (en matière sèche) ;
   - une teneur en éthanol inférieure à 0,2 % en poids, de préférence inférieure à 0,1 % en poids (en matière sèche) ;
   - une teneur en éthanol supérieure à 0,001 % en poids, de préférence supérieure à 0,01 % en poids (en matière sèche) ; et
   - une teneur en phénoliques inférieure à 0,1 % en poids, de préférence inférieure à 0,05 % en poids, plus préférablement inférieure à 0,02 % en poids (en matière sèche) exprimée en équivalents d'acide sinapique.

9. Protéine isolée ou composition de protéine de la revendication 8 qui a une teneur en glucosinolate inférieure à 10 μmol/g, de préférence inférieure à 1 μmol/g (en matière sèche).

10. Protéine isolée ou composition de protéine de la revendication 8 ou 9 qui a une teneur en lipides de 2 à 15 % en poids, de préférence 2 à 10 % en poids et plus préférablement 2 à 8 % en poids (en matière sèche) ou de 2 à 20 % en poids, de préférence 2 à 15 % en poids (en matière sèche) dans le cas de protéine de soja.

11. Protéine isolée ou composition de protéine de l'une quelconque des revendications 8 à 10 qui a une teneur en phytate (P x 3,5) inférieure à 0,5 % en poids, de préférence inférieure à 0,2 % en poids (en matière sèche).

12. Protéine isolée ou composition de protéine de l'une quelconque des revendications 8 à 11 qui a une solubilité d'au moins 30 % NS, de préférence au moins 50 % NS, plus préférablement au moins 60 % NS, encore plus préférablement au moins 70 % NS et de manière préférée entre toutes au moins 75 % NS.

13. Protéine isolée ou composition de protéine de l'une quelconque des revendications 8 à 10 qui a une teneur en matière sèche d'au moins 70 % en poids, de préférence au moins 80 % en poids, plus préférablement au moins 85 % en poids, encore plus préférablement au moins 90 % en poids, encore plus préférablement au moins 91 % en poids, encore plus préférablement a une teneur en matière sèche de 92 à 99 % en poids et de manière préférée entre toutes de 93 à 98 % en poids.

14. Protéine isolée ou composition de protéine de l'une quelconque des revendications 8 à 13 qui comprend une protéine de colza, de tournesol ou de soja.

15. Protéine isolée ou composition de protéine de l'une quelconque des revendications 8 à 13 qui comprend du colza et dans laquelle la protéine 2S et la protéine 12S sont présentes dans un rapport de 1:6 à 6:1, de préférence dans un rapport de 1:2 à 2:1 (poids/poids en matière sèche).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6905713 B

- WO 02060273 A

**Non-patent literature cited in the description**

- General tests and assays. Food Chemical Codex. 1133-1134
- General tests and assays. Food Chemical Codex. 1746
- FCC 7, General tests and assays. *Food Chemical Codex,* 1207-1208

- **NARVÁEZ-CUENCA et al.** *Journal of Agricultural and Food Chemistry,* 2011, vol. 59, 10247-10255
- **RAO et al.** *Anal. Biochem.,* 1989, vol. 181, 18-22